# EUROPEAN PATENT SPECIFICATION

(11) **EP 3 809 252 B1**
(45) Date of publication and mention of the grant of the patent: **25.06.2025**
(21) Application number: 18933412.1
(22) Date of filing: 07.11.2018
(51) Int. Cl.: G06F 3/0484, G06F 3/0488, G06F 21/36

(54) **SLIDING CONTROL METHOD AND APPARATUS, AND HOUSEHOLD APPLIANCE**
VERFAHREN UND VORRICHTUNG ZUR GLEITSTEUERUNG UND HAUSHALTSGERÄT
PROCÉDÉ ET APPAREIL DE COMMANDE DE COULISSEMENT, ET APPAREIL MÉNAGER

(30) Priority: 14.09.2018 CN 201811076518
(43) Date of publication of application: 21.04.2021
(73) Proprietor: Wuxi Little Swan Electric Co., Ltd., Wuxi, Jiangsu 214028 (CN)
(72) Inventor: LIANG, Deping, Wuxi, Jiangsu 214028 (CN); DU, Yongjie, Wuxi, Jiangsu 214028 (CN); MA, Xianxi, Wuxi, Jiangsu 214028 (CN)
(74) Representative: Whitlock, Holly Elizabeth Ann
(86) International application number: PCT/CN2018/114339
(87) International publication number: WO 2020/052036

(56) References cited:
- WO-A1-2013/079893
- CN-A- 104 536 686
- CN-A- 104 834 441
- CN-A- 107 422 973
- CN-A- 108 227 525
- CN-U- 202 836 055
- JP-A- 2018 022 266
- US-A1- 2014 181 760
- US-A1- 2015 121 315
- US-A1- 2015 227 306

## Description

### FIELD

The present disclosure relates to the field of household appliances and electronic equipment, and in particular relates to a sliding control method and device, and a household appliance.

### BACKGROUND

With the continuous development of smart household appliance technology and the increasing popularity of household appliance, users can trigger a touch control operation on an operation interface of the household appliance to unlock, and then issue a control instruction to control the household appliance. In the related art, the household appliance such as a washing machine is unlocked by means of combined keystrokes or sequential keystrokes.

US 2015/0227306 Al discuses the design of touchscreen software for unlocking a touchscreen. US 2015/0121315 Al discuses a graphical user interface on a touch screen display that allows a user to input multi-variable data via gestures. WO 2013/079893 A1 discuses the storage of data at a mobile client for access and analysis when the mobile client is disconnected from a server so that lock-out schemes can be implemented locally by the mobile client. CN108227525A relates generally to a control method for household appliances by manipulating the sub-regions in the area.

### SUMMARY

Aspects of the invention are set out in the claims. The present disclosure proposes a sliding control method and device, and a household appliance, so as to achieve determination of a control instruction corresponding to a sliding sequence, thereby providing an alternative method for controlling the household appliance or electronic equipment. Besides, when the control instruction is to unlock, the present method increases unlocking complexity, such that misoperation is avoided from occurring by accident, thereby improving reliability and safety of household appliance or electronic equipment. Therefore, the present method addresses the technique problem in the related art where the existing method for unlocking the household appliance is relative simple, which is prone to cause misoperation that decreases reliability and safety of household appliance.

In accordance with the present invention, there is provided a sliding control method to operate household appliances as set out in claim 1, a sliding control device as set out in claim 6, and a computer readable medium as set out in claim 8. Other aspects of the invention can be found in the dependent claims. Any embodiment referred to and not falling within the scope of the claims is merely an example useful to the understanding of the invention.

### BRIEF DESCRIPTION OF THE DRAWINGS

In order to explain the technical solutions in the embodiments of the present disclosure more clearly, brief illustration will be made below with reference to the drawings involved in embodiments. Obviously, the drawings in the following description are merely some embodiments of the present disclosure, and it would be appreciated by those with ordinary skills in the art to obtain other drawings deriving from these shown drawings without creative efforts.
Fig. 1 is a flow chart showing a sliding control method in an embodiment of the present disclosure.
Fig. 2 is a schematic diagram showing a control panel of a washing machine in an embodiment of the present disclosure.
Fig. 3 is a schematic diagram showing a sliding sequence in an embodiment of the present disclosure.
Fig. 4 is a flow chart showing a sliding control method in another embodiment of the present disclosure.
Fig. 5 is a flow chart showing a sliding control method in still another embodiment of the present disclosure.
Fig. 6 is a block diagram showing a sliding control device in still another embodiment of the present disclosure.
Fig. 7 is a block diagram showing a sliding control device in still another embodiment of the present disclosure.

### DETAILED DESCRIPTION

Reference will be made in detail to embodiments of the present disclosure. The same or similar elements and the elements having same or similar functions are denoted by like reference numerals throughout the descriptions. The embodiments described herein with reference to drawings are explanatory, illustrative, and used to generally understand the present disclosure. The embodiments shall not be construed to limit the present disclosure.

The present disclosure proposes a sliding control method, which mainly addresses the technique problem in the related art where the existing method for unlocking household appliance is relative simple, which is prone to cause misoperation that decreases reliability and safety of the household appliance.

According to embodiments of the present disclosure, the sliding control method detects a sliding touch control process; generates respective elements corresponding to individual sliding phases in accordance with respective positions to which individual sliding phases reach during the sliding touch control process; arranges the respective elements in accordance with an execution sequence of the individual sliding phases, thereby obtaining a sliding sequence; matches the sliding sequence to a control sequence preset; and executes a control instruction corresponding to the control sequence matched. By this way, the control instruction can be determined in accordance with the sliding sequence, thereby providing an alternative method for controlling the household appliance or electronic equipment. Besides, when the control instruction is to unlock, the present method increases unlocking complexity, such that misoperation is avoided from occurring by accident, thereby improving reliability and safety of household appliance or electronic equipment.

The sliding control method and device, and household appliance in embodiments of present disclosure are described below with reference to the accompanying drawings.

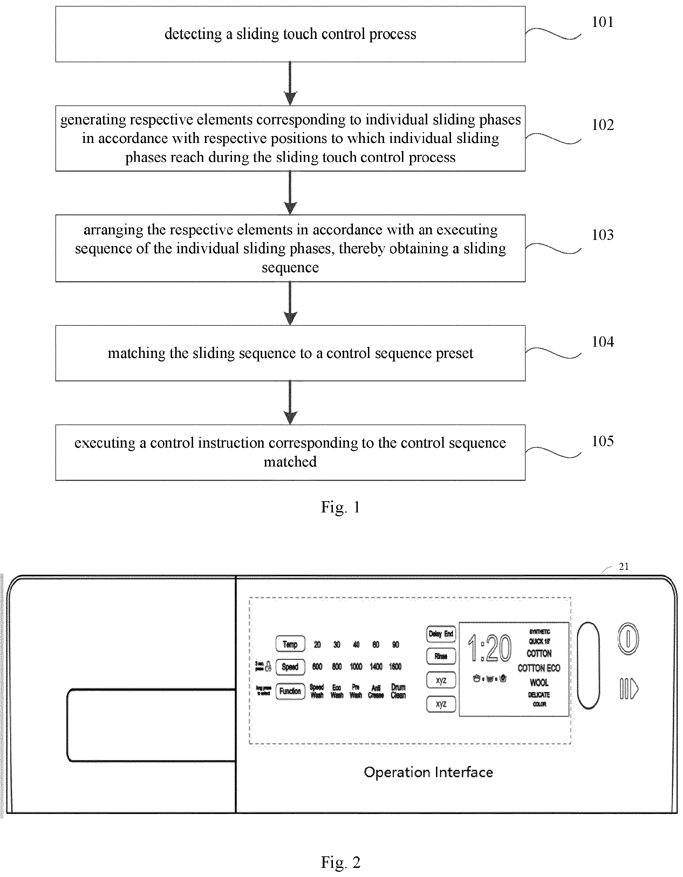

Fig. 1 is a flow chart showing a sliding control method in an embodiment of the present disclosure.

In this embodiment, a sliding control method is exemplified with reference to configuration in a sliding control device. Such a sliding control device is applicable to a household appliance, like a washing machine, a household air conditioner, a refrigerator, a television and other smart appliances, or applicable to an electronic device, like a mobile phone, a tablet, a personal digital assistant, a wearable device, and other hardware devices with various operating systems, touch screens and/or displays, so that the household appliance or electronic device can implement a sliding control function.

As shown in Fig. 1, the sliding control method includes the following steps S101 to S105.

At the Step 101, a sliding touch control process is detected.

In an embodiment, the sliding touch control process is a continuous process corresponding to a series of sliding touch control operations triggered by a user in a single time.

In an embodiment, a user may trigger a sliding touch control operation when unlocking a household appliance, issuing a control instruction or setting a functional parameter, and etc.. In specific, the user may touch on a display screen to make a sliding touch control operation. The touched household appliance or electronic device may be provided with a monitor to monitor the sliding touch control operation from the user. Once the sliding touch control operation is monitored from the user, the sliding touch control process can be monitored, that is, respective positions that individual sliding touch control operations pass by and coordinate values corresponding to the respective positions can be recorded.

As an example, the sliding control method is exemplified with reference to application in a household appliance. The household appliance may be provided with a groove, which can accommodate a finger, at its control panel. Further, for convenience of user's operation, the groove may be of a width similar to the finger and provided with a sensor inside, which can be used to detect the sliding touch control process. The groove may be arranged horizontally or longitudinally, which is not limited herein.

For example, the household appliance is a washing machine and a groove is arranged longitudinally. Referring to Fig. 2, Fig. 2 is a schematic diagram showing a control panel of a washing machine in an embodiment of the present disclosure. As shown in Fig. 2, the control panel is provided with the groove 21 for accommodating a finger, and the groove 21 is provided with a sensor at bottom by which the sliding touch control process can be detected, that is, respective positions that individual sliding touch operations pass by and coordinate values corresponding to the respective positions can be recorded by the sensor.

As an example, the sliding touch control method is exemplified with reference to application in an electronic device. The electronic device is provided with a display screen, under which a sensor is also provided. When a user triggers a sliding touch control operation, a sliding touch control process can be detected by the sensor, that is, respective positions that individual sliding touch operations pass by and coordinate values corresponding to the respective positions can be recorded by the sensor.

At the step 102, respective elements corresponding to individual sliding phases are generated in accordance with respective positions to which individual sliding phases reach during the sliding touch control process.

In an embodiment, each sliding phase corresponds to one element represented by a signed value.

In an embodiment, individual sliding phases during the sliding touch control process can be determined at first. For example, individual sliding phases can be determined in accordance with a direction and amplitude of respective sliding touch control operations. In specific, individual sliding phases can be determined in accordance with a preset reference position, a duration that sliding stops at the preset reference position, changed or unchanged direction of two adjacent sliding, a duration that sliding stops at one position and/or a sliding stop position. Detailed description will be made below, which is not elaborated herein

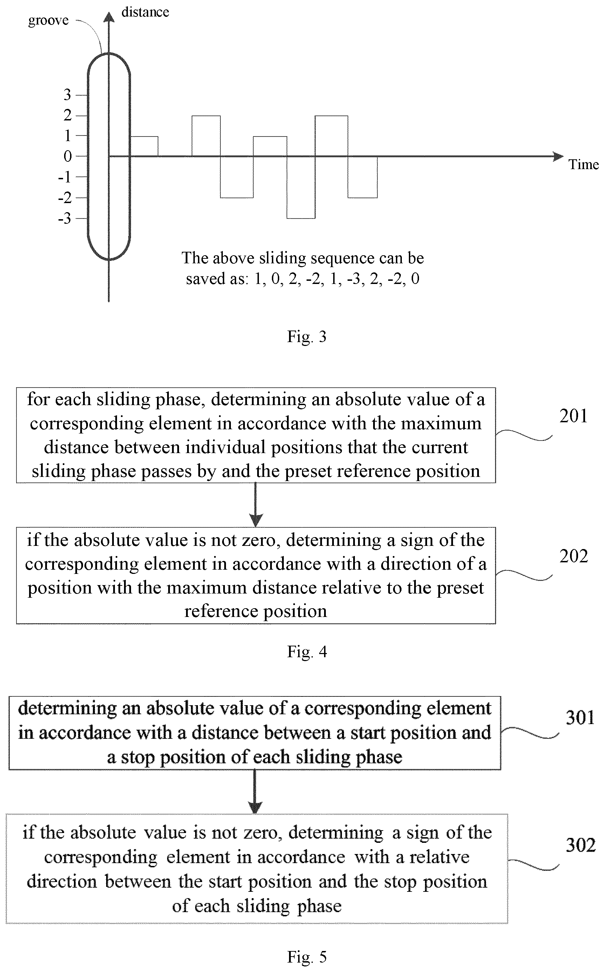

In an embodiment, after individual sliding phases are determined, respective elements corresponding to individual sliding phases can be generated in accordance with respective positions to which individual sliding phases reach during the sliding touch control process. As an example, the sliding control method is exemplified with reference to application in a household appliance. Referring to Fig. 3, Fig. 3 is a schematic diagram showing a sliding sequence in an embodiment of the present disclosure, where respective positions at the groove are of corresponding coordinate values, such that coordinate values of respective positions that individual sliding touch phases pass by can be recorded during the user's finger slides, and thus respective element values can be determined in accordance with respective positions to which individual sliding phases reach. For example, the maximum coordinate values corresponding to respective positions that individual sliding phases pass by can be taken as the respective elements.

At the step 103, the respective elements are arranged in accordance with an executing sequence of the individual sliding phases, thereby obtaining a sliding sequence.

In an embodiment, once determined, the respective elements can be arranged in accordance with an executing sequence of the individual sliding phases, thereby obtaining a sliding sequence. Still taking the above example as shown in Fig. 3, the first sliding phase corresponds to an element value of 1, the second sliding phase corresponds to an element value of 0, the third sliding phase corresponds to an element value of 2, ..., the ninth phase corresponds to an element value of 0. As such, with arranging the respective elements in accordance with the executing sequence of the individual sliding phases, the sliding sequence can be obtained as "1, 0, 2, -2, 1, -3, 2, -2, 0".

At the step 104, the sliding sequence is matched to a control sequence preset.

In an embodiment, the control sequence is preset in advance, which is for example set as a default in a factory program of an electronic device or household appliance, or set by a user, which is not limited herein For example, in order to meet different personalized setting needs, the control sequence can be generated by triggering the sliding touch control operations as personally required by different users, thereby improving applicability of the present method.

It would be appreciated that the control sequence preset may be one or more control sequences, each of which corresponds to one control instruction. Thus, in the present disclosure, the sliding sequence is matched to a plurality of preset control sequence one by one. In the case that individual elements in the sliding sequence match with those in a certain control sequence and these elements in the sliding sequence are of an arranging order same as those in said control sequence, it is determined that the sliding sequence is matched with said control sequence.

It should note that when the sliding sequence is "1, 0, 2, -2, 1" and the control sequence is "1, 0, 2, -2, 1, -3", the matching result is not correct if the sliding sequence is determined to be matched with the control sequence. Thus, in present disclosure, in order to improve accuracy of the matching result, it can be further determined whether the number of elements in the sliding sequence is consistent with that in the control sequence. If the number of elements in the sliding sequence is consistent with that in the control sequence, it is determined that the sliding sequence is matched with the control sequence; otherwise the sliding sequence is determined to be not matched with the control sequence.

At the step 105, a control instruction corresponding to the control sequence matched is executed.

In an embodiment, the control instruction may be different depending on different control sequences. For example, the control instruction corresponding to a control sequence A may be an unlocking instruction; the control instruction corresponding to a control sequence B may be a functional parameter setting instruction; the control instruction corresponding to a control sequence C may be a pause instruction; and the control instruction corresponding to a control sequence D may be a stop instruction.

As a possible implementation, a correspondence can be established between different control sequences and the control instructions in advance. Therefore, in an embodiment, after the sliding sequence is determined to be matched with the control sequence, an inquiry can be made in the correspondence by the control sequence, so as to acquire a corresponding control instruction. Accordingly, it is possible to control the electronic device or the household appliance to implement the corresponding control instruction.

According to embodiments of the present disclosure, the sliding control method detects a sliding touch control process; generates respective elements corresponding to individual sliding phases in accordance with respective positions to which individual sliding phases reach during the sliding touch control process; arranges the respective elements in accordance with an execution sequence of the individual sliding phases, thereby obtaining a sliding sequence; matches the sliding sequence to a control sequence preset; and executes a control instruction corresponding to the control sequence matched. By this way, the control instruction can be determined in accordance with the sliding sequence, thereby providing an alternative method for controlling the household appliance or electronic equipment. Besides, when the control instruction is to unlock, the present method increases unlocking complexity, such that misoperation is avoided from occurring by accident, thereby improving reliability and safety of household appliance or electronic equipment.

As a possible implementation, in order to improve flexibility and applicability of the present method, the preset control sequence can be updated. A user can set a control sequence in accordance with personalized needs and save this updated control sequence in a built-in program of the electronic device or household appliance. Further, verification can be made by requiring a user to input the control sequence again. In specific, the control sequence is updated only if a user inputs two identical control sequences, thereby preventing incorrect input from occurring.

As a possible implementation, the sliding phase can be identified by the following step: sliding that starts from a preset reference position till returns to the preset reference position is identified as one sliding phase.

The reference position is preset in advance, which is for example set as a default in a factory program of an electronic device or household appliance, or set by a user, which is not limited herein

As an example, the sliding control method is exemplified with reference to application in the household appliance. The preset reference position may be either of two ends of the groove at the control panel. For example, when the groove is arranged longitudinally, the preset reference position may be a position corresponding to the bottom end of the groove, or a position corresponding to the top end of the groove. Alternatively, the preset reference position may also be a symmetric center position, which is not limited herein

As an example, when the groove is arranged longitudinally, it is assumed that the preset reference position is the position corresponding to the bottom end of the groove. When a user's finger slides up from the preset reference position to a certain position, and then slides down from said certain position to the preset reference position, it is identified as one sliding phase. Afterwards, the user's finger may slide from the preset reference position again, and when the preset reference position is returned again, it is identified as another sliding phase. As such, individual sliding phases can be determined.

It should note that, during the sliding touch control process, if the user's finger stops at the preset reference position for a preset duration, it is identified as another sliding phase corresponding to an element value of 0. The preset duration is set in advance, which is for example set as a default in a factory program of an electronic device or household appliance, or set by a user, which is not limited herein

It should note that, in the case that only one sliding phase exists in the sliding touch control process or the current sliding phase is the last sliding phase in the sliding touch control phase, the user's finger may move in only one direction without sliding to the preset reference position again, under this circumstance, such a sliding phase can be identified by the following step: sliding that starts from a preset reference position till stops is identified as one sliding phase.

Accordingly, after individual sliding phases are determined, referring to Fig.4, the step 102 includes sub-steps 201 and 202.

At the sub-step 201, for each sliding phase, an absolute value of a corresponding element is determined in accordance with the maximum distance between individual positions that the current sliding phase passes by and the preset reference position.

For example, the preset reference position may be selected as an original position, and then respective distances between individual positions that the current sliding phase passes by and the preset reference position are determined based on a unit distance. From these determined distances, the maximum distance is selected as the absolute value of the corresponding element. Referring to Fig. 3, when the groove is arranged longitudinally, it is assumed that the preset reference position is the symmetric center position of the groove, the maximum distance for the first sliding phase is "1"; the maximum distance for the second sliding phase is "0", and the maximum distance for the third sliding phase is "2", etc..

At the sub-step 202, if the absolute value is not zero, a sign of the corresponding element is determined in accordance with a direction of a position with the maximum distance relative to the preset reference position.

As an example, when the sliding control method is applied in the household appliance, the groove is arranged longitudinally, and the preset reference position is the symmetric center position of the groove, the corresponding element may be determined to be of a positive value when the position with the maximum distance is above the preset reference position; while the corresponding element may be determined to be of a negative value when the position with the maximum distance is below the preset reference position. Alternatively, when the groove is arranged horizontally and the preset reference position is the symmetric center position of the groove, the corresponding element may be determined to be of a positive value when the position with the maximum distance is on the right of the preset reference position; while the corresponding element may be determined to be of a negative value when the position with the maximum distance is on the left of the preset reference position.

It should note that the above examples are merely for illustration but cannot be construed as limitations to the present disclosure. In practical applications, the sign of the corresponding element can be determined, as practical requirement, in accordance with a direction of a position with the maximum distance relative to the preset reference position. For example, the corresponding element may be determined to be of a positive value when the position with the maximum distance is below the preset reference position; or the corresponding element may be determined to be of a positive value when the position with the maximum distance is on the left of the preset reference position, which is not limited herein

As an example, referring to Fig. 3, for the first sliding phase, the position with the maximum distance is above the preset reference position, thus the element value may be "+1"; and for the fourth sliding phase, the position with the maximum distance is below the preset reference position, thus the element value may be "-2".

As an alternative possible implementation, during the sliding touch control process, the user's finger may start sliding from a certain start position instead of the preset reference position; and may change sliding direction when reach to another position and continue sliding. Thus, in the present disclosure, the sliding phase can be identified by the following step: two adjacent sliding direction changes are identified as one sliding phase.

It should note that, during the sliding touch control process, if the user's finger stops at one position for a preset duration, it is identified as another sliding phase corresponding to an element value of 0.

Accordingly, after individual sliding phases are determined, referring to Fig. 5, the step 102 may specifically include the following sub-steps 301 to 302.

At the sub-step 301, an absolute value of a corresponding element is determined in accordance with a distance between a start position and a stop position of each sliding phase.

In an embodiment, it is assumed that the user's finger does not stop at one position for a preset duration during the sliding touch control process, then the stop position for the first sliding phase is a position where the sliding direction is changed firstly; the start position for the second sliding phase is the stop position for the first sliding phase and the stop position for the second sliding phase is a position where the sliding direction is changed secondly, and so on. As such, respective start positions and stop positions of individual sliding phases can be obtained, and thus the absolute value of the corresponding element can be determined in accordance with the distance between the start position and the stop position of each sliding phase.

During the sliding touch control process, if the user's finger stops at one position for a preset duration, it is identified as another sliding phase corresponding to an element value of 0.

At the sub-step 302, if the absolute value is not zero, a sign of the corresponding element is determined in accordance with a relative direction between the start position and the stop position of each sliding phase.

As an example, when the sliding control method is applied in the household appliance and the groove is arranged longitudinally, the corresponding element may be determined to be of a positive value when the stop position is above the start position for each sliding phase; while the corresponding element may be determined to be of a negative value when the stop position is below the start position for each sliding phase. As an alternative example, when the groove is arranged horizontally, the corresponding element may be determined to be of a positive value when the stop position is on the right of the start position for each sliding phase; while the corresponding element may be determined to be of a negative value when the stop position is on the left of the start position for each sliding phase.

It should note that the above examples are merely for illustration but cannot be construed as limitations to the present disclosure. In practical applications, the sign of the corresponding element can be determined, as practical requirement, in accordance with the a relative direction between the start position and the stop position of each sliding phase. For example, the corresponding element may be determined to be of a positive value when the stop position is below the start position for each sliding phase; while the corresponding element may be determined to be of a positive value when the stop position is on the left of the start position for each sliding phase, which is not limited herein.

In order to achieve the above examples, the present disclosure further provides in embodiments a sliding control device.

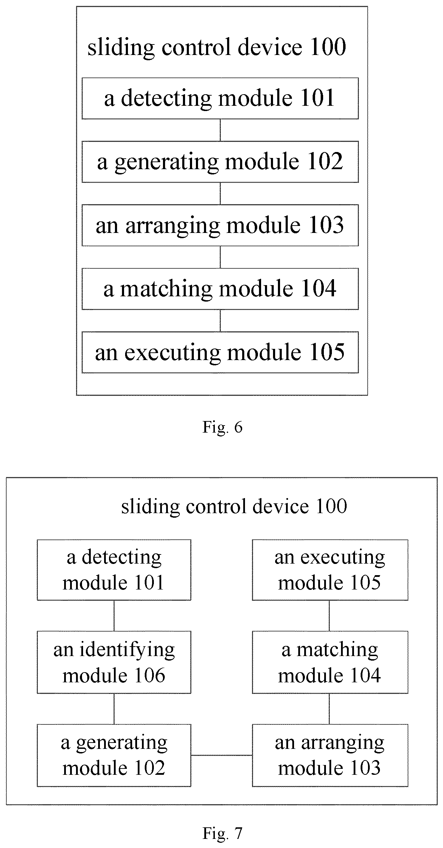

Fig. 6 is a block diagram showing a sliding control device in still another embodiment of the present disclosure.

As shown in Fig. 6, the sliding control device 100 includes: a detecting module 101, a generating module 102, an arranging module 103, a matching module, 104 and an executing module 105.

The detecting module 101 is configured to detect a sliding touch control process.

The generating module 102 is configured to generate respective elements corresponding to individual sliding phases in accordance with respective positions to which individual sliding phases reach during the sliding touch control process.

The arranging module 103 is configured to arrange the respective elements in accordance with an executing sequence of the individual sliding phases, thereby obtaining a sliding sequence.

The matching module 104 is configured to match the sliding sequence to a control sequence preset.

The executing module 105 is configured to execute a control instruction corresponding to the control sequence matched.

Further, the present disclosure provides in embodiments a possible implementation, referring to Fig. 7, which is on the basis of embodiment as shown in Fig. 6, the sliding control device 100 may further include an identify module 106.

The identify module 106 is configured to identify sliding that starts from a preset reference position till returns to the preset reference position as one sliding phase; and identify sliding that stops at the preset reference position for a preset duration as one sliding phase, before respective elements corresponding to individual sliding phases are generated in accordance with respective positions to which individual sliding phases reach during the sliding touch control process.

As a possible implementation, the identify module 106 is further configured to identify sliding that starts from a preset reference position till stops as one sliding phase.

Accordingly, the generating module 102 is specifically configured: for each sliding phase, to determine an absolute value of a corresponding element in accordance with the maximum distance between individual positions that the current sliding phase passes by and the preset reference position; and if the absolute value is not zero, to determine a sign of the corresponding element in accordance with a direction of a position with the maximum distance relative to the preset reference position.

As an alternative possible implementation, the identify module 106 is further configured to identify two adjacent sliding direction changes as one sliding phase; and to identify sliding that stops at one position for a preset duration as one sliding phase.

Accordingly, the generating module 102 is specifically configured to determine an absolute value of a corresponding element in accordance with a distance between a start position and a stop position of each sliding phase; and to determine a sign of the corresponding element in accordance with a relative direction between the start position and the stop position of each sliding phase if the absolute value is not zero.

As a possible implementation, the control instruction corresponding to the control sequence matched includes an unlocking instruction.

It should note that the foregoing explanation in embodiments as to the sliding control method is also applicable to the sliding control device 100 in the embodiments, which is not repeated herein

According to embodiments of the present disclosure, the sliding control device detects a sliding touch control process; generates respective elements corresponding to individual sliding phases in accordance with respective positions to which individual sliding phases reach during the sliding touch control process; arranges the respective elements in accordance with an execution sequence of the individual sliding phases, thereby obtaining a sliding sequence; matches the sliding sequence to a control sequence preset; and executes a control instruction corresponding to the control sequence matched. By this way, the control instruction can be determined in accordance with the sliding sequence, thereby providing an alternative device for controlling the household appliance or electronic equipment. Besides, when the control instruction is to unlock, the present device increases unlocking complexity, such that misoperation is avoided from occurring by accident, thereby improving reliability and safety of household appliance or electronic equipment.

In order to achieve the above embodiments, the present disclosure provides in embodiments a household appliance, including a memory; a processor; and a computer program stored on the memory and executable by the processor, wherein the computer program, when executed by the processor, implements the sliding control method as described in the above embodiments of the present disclosure.

Further, the household appliance may be provided with a control panel, which is further provided with a groove for accommodating a finger.

The groove is provided with a sensor at bottom by which the sliding touch control process can be detected.

In an embodiment, the groove may be arranged horizontally or longitudinally, which is not limited herein.

As an example, when the household appliance is a washing machine and the groove is arranged longitudinally, referring to Fig. 2, the groove 21 can accommodate a finger and is provided with a sensor at bottom, so as to detect the sliding touch control process triggered by the user's finger.

It should note that the foregoing explanation in embodiments as to the sliding control method is also applicable to the household appliance in this embodiment, which is not repeated herein.

In order to achieve the above embodiments, the present disclosure provides in embodiments a computer readable storage medium having stored therein a computer program that, when executed by a processor, implements the sliding control method as described in the above embodiments of the present disclosure.

Reference throughout this specification to "an embodiment", "some embodiments", "one embodiment", "another example", "an example", "a specific example" or "some examples" means that a particular feature, structure, material, or characteristic described in connection with the embodiment or example is included in at least one embodiment or example of the present disclosure. Thus, the appearances of the phrases such as "in some embodiments", "in one embodiment", "in an embodiment", "in another example", "in an example", "in a specific example" or "in some examples", in various places throughout this specification are not necessarily referring to the same embodiment or example of the present disclosure. Furthermore, the particular features, structures, materials, or characteristics may be combined in any suitable manner in one or more embodiments or examples. In addition, those skilled in the art can combine the different embodiments or examples and the features described in the different embodiments or examples in this specification without contradicting each other.

In addition, terms such as "first" and "second" are used herein for purposes of description and are not intended to indicate or imply relative importance or significance or impliedly indicate quantity of the technical feature referred to. Thus, the feature defined with "first" and "second" may comprise one or more this feature. In the description of the present disclosure, "a plurality of" means two or more than two this features, for example two, three and etc., unless specified otherwise.

Any procedure or method described in the flow charts or described in any other way herein may be appreciated to comprise one or more modules, portions or parts for storing executable codes that realize particular logic functions or procedures. Moreover, advantageous embodiments of the present disclosure comprises other implementations in which the order of execution is different from that which is depicted or discussed, including executing functions in a substantially simultaneous manner or in an opposite order according to the related functions. This should be appreciated by those skilled in the art to which embodiments of the present disclosure belong.

The logic and/or step described in other manners herein or shown in the flow chart, for example, a particular sequence table of executable instructions for realizing the logical function, may be specifically achieved in any computer readable medium to be used by the instruction execution system, device or equipment (such as the system based on computers, the system comprising processors or other systems capable of obtaining the instruction from the instruction execution system, device and equipment and executing the instruction), or to be used in combination with the instruction execution system, device and equipment. As to the specification, "the computer readable medium" may be any device adaptive for including, storing, communicating, propagating or transferring programs to be used by or in combination with the instruction execution system, device or equipment. More specific examples of the computer readable medium comprise but are not limited to: an electronic connection (an electronic device) with one or more wires, a portable computer enclosure (a magnetic device), a random access memory (RAM), a read only memory (ROM), an erasable programmable read-only memory (EPROM or a flash memory), an optical fiber device and a portable compact disk read-only memory (CDROM). In addition, the computer readable medium may even be a paper or other appropriate medium capable of printing programs thereon, this is because, for example, the paper or other appropriate medium may be optically scanned and then edited, decrypted or processed with other appropriate methods when necessary to obtain the programs in an electric manner, and then the programs may be stored in the computer memories.

It should be appreciated that each part of the present disclosure may be realized by the hardware, software, firmware or their combination. In the above embodiments, a plurality of steps or methods may be realized by the software or firmware stored in the memory and executed by the appropriate instruction execution system. For example, if it is realized by the hardware, likewise in another embodiment, the steps or methods may be realized by one or a combination of the following techniques known in the art: a discrete logic circuit having a logic gate circuit for realizing a logic function of a data signal, an application-specific integrated circuit having an appropriate combination logic gate circuit, a programmable gate array (PGA), a field programmable gate array (FPGA), etc.

Those skilled in the art shall appreciate that all or parts of the steps in the above exemplifying method for the present disclosure may be achieved by commanding the related hardware with programs. The programs may be stored in a computer readable storage medium, and the programs comprise one or a combination of the steps in the method embodiments of the present disclosure when run on a computer.

In addition, each function cell of the embodiments of the present disclosure may be integrated in a processing module, or these cells may be separate physical existence, or two or more cells are integrated in a processing module. The integrated module may be realized in a form of hardware or in a form of software function modules. When the integrated module is realized in a form of software function module and is sold or used as a standalone product, the integrated module may be stored in a computer readable storage medium.

The storage medium mentioned above may be read-only memories, magnetic disks, CD, etc.

Although explanatory embodiments have been shown and described, it would be appreciated by those skilled in the art that the above embodiments cannot be construed to limit the present disclosure, and changes, alternatives, and modifications can be made in the embodiments in the scope of the present disclosure.

## Claims

1. A sliding control method to operate household appliances, the method comprising:
detecting (101) a sliding touch control process;
generating (102) respective elements corresponding to individual sliding phases in accordance with respective positions to which individual sliding phases reach during the sliding touch control process wherein generating respective elements further comprises:
determining (301) an absolute value of a corresponding element in accordance with a distance between a start position and a stop position of each sliding phase; and
determining (302) a sign of the corresponding element in accordance with a relative direction between the start position and the stop position of each sliding phase if the absolute value is not zero;
arranging (103) the respective elements in accordance with an executing sequence of the individual sliding phases, thereby obtaining a sliding sequence;
matching (104) the sliding sequence to a control sequence preset; and
executing (105) a control instruction corresponding to the control sequence matched.

2. The sliding control method according to claim 1, further comprising, prior to generating respective elements corresponding to individual sliding phases in accordance with respective positions to which individual sliding phases reach during the sliding touch control process:
identifying sliding that starts from a preset reference position till returns to the preset reference position as one sliding phase; or
identifying sliding that stops at the preset reference position for a preset duration as one sliding phase.

3. The sliding control method according to claim 1 or 2, further comprising, prior to generating respective elements corresponding to individual sliding phases in accordance with respective positions to which individual sliding phases reach during the sliding touch control process:
identifying sliding that starts from a preset reference position till stops as one sliding phase.

4. The sliding control method according to any one of claims 1 to 3, further comprising, prior to generating respective elements corresponding to individual sliding phases in accordance with respective positions to which individual sliding phases reach during the sliding touch control process:
identifying a sliding touch control process between two adjacent sliding directions changes as one sliding phase; or
identifying sliding that stops at one position for a preset duration as one sliding phase.

5. The sliding control method according to any one of claims 1 to 4, wherein the control instruction corresponding to the control sequence matched comprises an unlocking instruction.

6. A sliding control device (100), comprising:
a detecting module (101), configured to detect a sliding touch control process;
a generating module (102), configured to generate respective elements corresponding to individual sliding phases in accordance with respective positions to which individual sliding phases reach during the sliding touch control process, the generating module (102) further configured to
determine an absolute value of a corresponding element in accordance with a distance between a start position and a stop position of each sliding phase; and
determine a sign of the corresponding element in accordance with a relative direction between the start position and the stop position of each sliding phase if the absolute value is not zero;
an arranging module (103), configured to arrange the respective elements in accordance with an executing sequence of the individual sliding phases, thereby obtaining a sliding sequence;
a matching module (104), configured to match the sliding sequence to a control sequence preset; and
an executing module (105), configured to execute a control instruction corresponding to the control sequence matched.

7. A household appliance comprising:
a control panel provided with a groove for accommodating a finger, the groove provided with a sensor at a bottom of the control panel and configured to detect a sliding touch control process, the control panel further comprising the sliding control device of claim 6.

8. A computer readable storage medium having stored therein a computer program that, when executed by a processor of the household appliance of claim 7, causes said household appliance to carry out the sliding control method as defined in any one of claims 1 to 5.

## Patentansprüche

1. Gleitsteuerungsverfahren zum Bedienen von Haushaltsgeräten, wobei das Verfahren Folgendes beinhaltet:
Erkennen (101) eines Gleitberührungssteuerungsvorgangs;
Erzeugen (102) jeweiliger Elemente entsprechend einzelnen Gleitphasen gemäß jeweiligen Positionen, die einzelne Gleitphasen während des Gleitberührungssteuerungsvorgangs erreichen, wobei das Erzeugen jeweiliger Elemente ferner Folgendes beinhaltet:
Bestimmen (301) eines Absolutwerts eines entsprechenden Elements gemäß einem Abstand zwischen einer Startposition und einer Stoppposition jeder Gleitphase; und
Bestimmen (302) eines Vorzeichens des entsprechenden Elements gemäß einer relativen Richtung zwischen der Startposition und der Stoppposition jeder Gleitphase, wenn der Absolutwert nicht Null ist;
Anordnen (103) der jeweiligen Elemente gemäß einer Ausführungssequenz der einzelnen Gleitphasen, wodurch eine Gleitsequenz erhalten wird;
Abgleichen (104) der Gleitsequenz mit einer voreingestellten Steuerungssequenz; und
Ausführen (105) eines Steuerbefehls entsprechend der abgeglichenen Steuerungssequenz.

2. Gleitsteuerungsverfahren nach Anspruch 1, das ferner, vor dem Erzeugen jeweiliger Elemente entsprechend einzelnen Gleitphasen gemäß jeweiligen Positionen, die einzelne Gleitphasen während des Gleitberührungssteuerungsvorgangs erreichen, Folgendes beinhaltet:
Identifizieren von Gleiten, das von einer voreingestellten Referenzposition bis zur Rückkehr zur voreingestellten Referenzposition beginnt, als eine Gleitphase; oder
Identifizieren von Gleiten, das an der voreingestellten Referenzposition für eine voreingestellte Dauer stoppt, als eine Gleitphase.

3. Gleitsteuerungsverfahren nach Anspruch 1 oder 2, das ferner, vor dem Erzeugen jeweiliger Elemente entsprechend einzelnen Gleitphasen gemäß jeweiligen Positionen, die einzelne Gleitphasen während des Gleitberührungssteuerungsvorgangs erreichen, Folgendes beinhaltet:
Identifizieren von Gleiten, das von einer voreingestellten Referenzposition bis zum Stoppen beginnt, als eine Gleitphase.

4. Gleitsteuerungsverfahren nach einem der Ansprüche 1 bis 3, das ferner, vor dem Erzeugen jeweiliger Elemente entsprechend einzelnen Gleitphasen gemäß jeweiligen Positionen, die einzelne Gleitphasen während des Gleitberührungssteuerungsvorgangs erreichen, Folgendes beinhaltet:
Identifizieren eines Gleitberührungssteuerungsvorgangs zwischen zwei benachbarten Gleitrichtungsänderungen als eine Gleitphase; oder
Identifizieren von Gleiten, das an einer Position für eine voreingestellte Dauer stoppt, als eine Gleitphase.

5. Gleitsteuerungsverfahren nach einem der Ansprüche 1 bis 4, wobei der Steuerbefehl entsprechend der abgeglichenen Steuerungssequenz einen Entriegelungsbefehl umfasst.

6. Gleitsteuerungsvorrichtung (100), die Folgendes umfasst:
ein Erkennungsmodul (101), das zum Erkennen eines Gleitberührungssteuerungsvorgangs konfiguriert ist;
ein Erzeugungsmodul (102), das zum Erzeugen jeweiliger Elemente entsprechend einzelnen Gleitphasen gemäß jeweiligen Positionen konfiguriert ist, die einzelne Gleitphasen während des Gleitberührungssteuerungsvorgangs erreichen, wobei das Erzeugungsmodul (102) ferner konfiguriert ist zum:
Bestimmen eines Absolutwerts eines entsprechenden Elements gemäß einem Abstand zwischen einer Startposition und einer Stoppposition jeder Gleitphase; und
Bestimmen eines Vorzeichens des entsprechenden Elements gemäß einer relativen Richtung zwischen der Startposition und der Stoppposition jeder Gleitphase, wenn der Absolutwert nicht Null ist,
ein Anordnungsmodul (103), das zum Anordnen der jeweiligen Elemente gemäß einer Ausführungssequenz der einzelnen Gleitphasen konfiguriert ist, wodurch eine Gleitsequenz erhalten wird;
ein Abgleichmodul (104), das zum Abgleichen der Gleitsequenz mit einer voreingestellten Steuerungssequenz konfiguriert ist; und
ein Ausführungsmodul (105), das zum Ausführen eines Steuerbefehls entsprechend der abgeglichenen Steuerungssequenz konfiguriert ist.

7. Haushaltsgerät, das Folgendes umfasst:
ein Bedienfeld, das mit einer Nut zur Aufnahme eines Fingers versehen ist, wobei die Nut an einer Unterseite des Bedienfelds mit einem Sensor versehen und zum Erkennen eines Gleitberührungssteuerungsvorgangs konfiguriert ist, wobei das Bedienfeld ferner die Gleitsteuerungsvorrichtung nach Anspruch 6 umfasst.

8. Computerlesbares Speichermedium, auf dem ein Computerprogramm gespeichert ist, das bei Ausführung durch einen Prozessor des Haushaltsgeräts nach Anspruch 7 das genannte Haushaltsgerät zum Durchführen des Gleitsteuerungsverfahrens gemäß einem der Ansprüche 1 bis 5 veranlasst.

## Revendications

1. Procédé de commande par glissement pour le fonctionnement d'appareils ménagers, comprenant les étapes consistant à :
détecter (101) un processus de commande tactile par glissement ;
générer (102) des éléments respectifs correspondant à des phases de glissement individuelles selon des positions respectives que des phases de glissement individuelles atteignent au cours du processus de commande tactile par glissement, la génération d'éléments respectifs comprenant en outre les étapes consistant à :
déterminer (301) une valeur absolue d'un élément correspondant selon une distance entre une position de départ et une position d'arrêt de chaque phase de glissement ; et
déterminer (302) un signe de l'élément correspondant selon une direction relative entre la position de départ et la position d'arrêt de chaque phase de glissement si la valeur absolue n'est pas nulle ;
agencer (103) les éléments respectifs selon une séquence d'exécution des phases de glissement individuelles, ce qui permet d'obtenir une séquence de glissement ;
mettre en correspondance (104) la séquence de glissement avec une séquence de commande prédéfinie ; et
exécuter (105) une instruction de commande correspondant à la séquence de commande mise en correspondance.

2. Procédé de commande par glissement selon la revendication 1, comprenant en outre, avant de générer des éléments respectifs correspondant à des phases de glissement individuelles selon des positions respectives que des phases de glissement individuelles atteignent au cours du processus de commande tactile par glissement, l'étape consistant à :
identifier un glissement qui part d'une position de référence prédéfinie jusqu'au retour à la position de référence prédéfinie comme une seule phase de glissement ; ou
identifier un glissement qui s'arrête à la position de référence prédéfinie pendant une durée prédéfinie comme une seule phase de glissement.

3. Procédé de commande par glissement selon la revendication 1 ou 2, comprenant en outre, avant de générer des éléments respectifs correspondant à des phases de glissement individuelles selon des positions respectives que les phases de glissement individuelles atteignent au cours du processus de commande tactile par glissement, l'étape consistant à :
identifier un glissement qui part d'une position de référence prédéfinie jusqu'à l'arrêt comme une seule phase de glissement.

4. Procédé de commande par glissement selon l'une quelconque des revendications 1 à 3, comprenant en outre, avant de générer des éléments respectifs correspondant à des phases de glissement individuelles selon des positions respectives que les phases de glissement individuelles atteignent au cours du processus de commande tactile par glissement, l'étape consistant à :
identifier un processus de commande tactile par glissement entre deux changements de sens de glissement adjacents comme une seule phase de glissement ; ou
identifier un glissement qui s'arrête à une position pendant une durée prédéfinie comme une seule phase de glissement.

5. Procédé de commande par glissement selon l'une quelconque des revendications 1 à 4, l'instruction de commande qui correspond à la séquence de commande mise en correspondance comprenant une instruction de déverrouillage.

6. Dispositif de commande par glissement (100), comprenant :
un module de détection (101), configuré pour détecter un processus de commande tactile par glissement ;
un module de génération (102), configuré pour générer des éléments respectifs correspondant à des phases de glissement individuelles selon des positions respectives que les phases de glissement individuelles atteignent au cours du processus de commande tactile par glissement, le module de génération (102) étant en outre configuré pour :
déterminer une valeur absolue d'un élément correspondant selon une distance entre une position de départ et une position d'arrêt de chaque phase de glissement ; et
déterminer un signe de l'élément correspondant selon une direction relative entre la position de départ et la position d'arrêt de chaque phase de glissement si la valeur absolue n'est pas nulle ;
un module d'agencement (103), configuré pour agencer les éléments respectifs selon une séquence d'exécution des phases de glissement individuelles, ce qui permet d'obtenir une séquence de glissement ;
un module de mise en correspondance (104), configuré pour mettre en correspondance la séquence de glissement avec une séquence de commande prédéfinie ; et
un module d'exécution (105), configuré pour exécuter une instruction de commande correspondant à la séquence de commande mise en correspondance.

7. Appareil ménager, comprenant :
un panneau de commande muni d'une rainure pour recevoir un doigt, la rainure étant munie d'un capteur situé au niveau d'une partie inférieure du panneau de commande et configuré pour détecter un processus de commande tactile par glissement, le panneau de commande comprenant en outre le dispositif de commande par glissement selon la revendication 6.

8. Support de stockage lisible par ordinateur, sur lequel est stocké un programme informatique qui, lorsqu'il est exécuté par un processeur de l'appareil ménager selon la revendication 7, amène ledit appareil ménager à exécuter le procédé de commande par glissement selon l'une quelconque des revendications 1 à 5.
